# EUROPEAN PATENT SPECIFICATION

(11) **EP 4 260 707 B1**
(45) Date of publication and mention of the grant of the patent: **29.07.2026**
(21) Application number: 22205914.9
(22) Date of filing: 07.11.2022
(51) Int. Cl.: A23B 2/92, A21D 13/045, A21D 13/45, A23B 75/00, A23L 11/00, A23L 11/50

(54) **METHOD OF PRODUCING FERMENTED, FREEZE-DRIED WAFER-TYPE PRODUCTS BASED ON LEGUMES**
METHODE ZUR HERSTELLUNG EINES FERMENTIERTEN, GEFRIERGETROCKNETEN, WAFFELARTIGEN PRODUKTS AUS HÜLSENFRÜCHTEN
PROCÉDÉ DE FABRICATION DE PRODUITS FERMENTÉS DE TYPE CACHETS LYOPHILISÉS À BASE DE LÉGUMES

(30) Priority: 13.04.2022 PL 44092522
(43) Date of publication of application: 18.10.2023
(73) Proprietor: Uniwersytet Przyrodniczy w Poznaniu, 60-637 Poznan (PL)
(72) Inventor: GUMIENNA, Malgorzata, 61-627 Poznan (PL); LASIK-KURDYS, Malgorzata, 62-002 Jelonek (PL); GÓRNA, Barbara, 64-330 Opalenica (PL)
(74) Representative: Augustyniak, Magdalena Anna

(56) References cited:
- CN-A- 110 192 564
- JAKUBCZYK ANNA: "Effect of addition of fermented bean seed flour on the content of bioactive components and nutraceutical potential of wheat wafers", vol. 98, 1 December 2018 (2018-12-01), United Kingdom, pages 245 - 251, XP093069128, ISSN: 0023-6438, Retrieved from the Internet <URL:https://www.sciencedirect.com/science/article/pii/S0023643818307047/pdfft?md5=1db90e1575c82644d7ed4a0a8656bdca&pid=1-s2.0-S0023643818307047-main.pdf> [retrieved on 20230802], DOI: 10.1016/j.lwt.2018.08.052
- TODOROV SVETOSLAV DIMITROV ET AL: "Lactobacillus Plantarum : Characterization of the Species and Application in Food Production", FOOD REVIEWS INTERNATIONAL, vol. 26, no. 3, 9 June 2010 (2010-06-09), Philadelphia, USA, pages 205 - 229, XP093069770, ISSN: 8755-9129, DOI: 10.1080/87559129.2010.484113
- THOMPSON H O ET AL: "Fermentation of Cauliflower and White Beans with- Impact on Levels of Riboflavin, Folate, Vitamin B, and Amino Acid Composition", PLANTS FOODS FOR HUMAN NUTRITION, KLUWER ACADEMIC PUBLISHERS, NL, vol. 75, no. 2, 6 March 2020 (2020-03-06), pages 236 - 242, XP037154369, ISSN: 0921-9668, [retrieved on 20200306], DOI: 10.1007/S11130-020-00806-2
- BAKING_WITHBABY: "Baked bean waffels #eggfree", 5 February 2021 (2021-02-05), XP002809852, Retrieved from the Internet <URL:https://www.facebook.com/105774934789965/posts/baked-bean-waffles-eggfree-as-part-of-followfriday-im-going-to-share-a-recipe-fr/117941976906594/> [retrieved on 20230802]

## Description

The object of the invention are freeze-dried products obtained from seeds of legumes, containing functional food ingredients.

Legumes are a rich source of nutrients such as protein, low-glycaemic carbohydrates and minerals (Bielefeld et al., 2020; Calles et al., 2019; Didinger and Thompson, 2021). Their recommended consumption, which should be approximately 50 g/person/day (0-100 g/person/day), is not achieved in most countries. This is estimated to be approximately 21 g/day worldwide (Rawal & Navarro, 2019), approximately 4g/person/day in Australia (Bielefeld et al., 2020), while data on legume consumption in Poland indicate that it is 0.9 kg/year/person, which is approximately 4 g/person, 2.5 g/person/day (Szczebylo et al., 2018).

However, in view of the growing problems of excessive environmental impact by agricultural production, especially livestock production, and the problem of malnutrition that has remained unresolved for years, both in terms of quantity and quality, there is an increasing emphasis on the consumption of legumes. According to the assumptions of the so-called planetary diet which is expected to improve health, including coronary heart disease risk reduction (Bechthold et al., 2019) and weight control (Kim et al., 2016), environmental benefits, as well as food security, the Food and Agriculture Organization of the United Nations (FAO) and other authors postulate that global consumption of fruit, vegetables, nuts and legumes will need to double by 2050, while reducing red meat and sugar consumption by more than 50% (Bahl, 2015; Calles et al., 2019; Rawal and Navarro, 2019; Willett et al., 2019).

Legume seeds as one of the richest sources of protein among all crops, with protein levels of up to 20-42% and a higher biological value than protein from cereals. Legumes and cereals differ in their amino acid composition. Protein from legumes has significantly more lysine and threonine but less sulphur amino acids and tryptophan. Legume protein can be divided into two main fractions: albumins, which represent 10-25% of total protein, and globulins which represent 60-90% of total protein and are soluble in neutral salt solutions. They form complex connections with carbohydrates, nucleic acids and lipids. They increase the nutritional value of the seeds.

On the other hand, mineral compounds represent 3.5 - 6.5%. These mainly include potassium, phosphorus, calcium, magnesium. Among the micronutrients, molybdenum, iron, manganese, copper and zinc can be distinguished. Moreover, seeds of legumes are a source of B vitamins and vitamin E (Kapusta 2012).

Legumes are also considered a rich source of dietary fibre and a raw material with a low glycaemic index, possessing the ability to reduce blood sugar levels. Studies clearly show the importance of seeds of legumes in the diet of diabetics. Eating 65 g of legumes per day was shown to reduce the risk of developing this disease by 49% [Villegas, 2008]. The intensive development of epidemiological studies, as well as the analysis of the causes of the development of metabolic diseases, indicate that there is a close relationship between food quality, nutrition and human health. Dietary prevention and diet treatment are becoming increasingly popular and appear to be an opportunity to improve living conditions and reduce the incidence of many diseases of affluence, as nutritional habits are one of the basic conditions for maintaining health status and has a direct effect on the overall condition of the body.

The bioactive constituents are a wide range of polyphenolic compounds that include, inter alia, glycosides, quercetin, kaempferol, myricetin, phenolic acids, isoflavonoids, catechins, anthocyanidins, phytoalexins and tannins. These compounds are mainly concentrated in the seed coats, and the seeds of colour-flowering varieties contain significantly more of them. They show very high activity and are also among the compounds that are amylase inhibitors.

It is thought that plants rich in phenolic antioxidants are so-called "phytochemicals" that may show similar effects in an "*in vitro*" system as hypoglycaemic drugs [Lunceford and Gugliucci, 2005]. The seeds of legumes (soya, beans, peas, lentils, chickpeas, broad beans, lupins) are among the raw materials that are very rich in protein, fibre and bioactive compounds, and yet they represent a small proportion of the daily diet. This is mainly due to the need to process such raw material (they are not suitable for raw consumption). This results in a great need for technology to process these raw materials in such a way as to retain as many nutrients and bioactive constituents as possible while not requiring the consumer to process them for too long.

The evidence for the bioavailability of polyphenols are plasma tests carried out after the consumption of polyphenol-containing foods, which showed an increase in antioxidant activity in the test material. A urinalysis for polyphenol levels was also carried out, which showed that a significant proportion of these compounds are not present in the urine, meaning that these compounds are largely absorbed into the body, metabolised by the body's microflora or tissues (Scalbert, Williamson 2000). Polyphenols, like other ingredients introduced into the body, undergo a series of metabolic changes that affect their bioavailability. Most polyphenols in food are present in the form of esters, polymers or glycosides. They must be enzymatically hydrolysed before absorption (D'Archivio et al. 2007). Bioavailability is thus largely affected by intestinal microorganisms, which have the ability to metabolise phenolic compounds using the enzymes produced - β-glucosidase, β-glucuronidase and hydrogenase (M 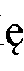 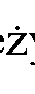 y 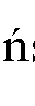 ska and Brz 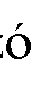 ska 2016).

It is believed that only 5% of polyphenols are absorbed in the duodenum and the remaining 95% in the large intestine precisely due to the activity of the intestinal microflora (Przeor et al. 2016). Among polyphenols, isoflavones have the highest bioavailability and are the most susceptible to gut microbes (Mojzer et al. 2016).

There is a particular focus on cereal grains and their products, which are significantly cheaper than other food items, and food consumption data show that they represent still an important product group from a nutritional point of view. Therefore, there has been a concentration of research in many research centres to search for raw materials with an antioxidant function and to enrich foods with these substances, as deficiencies of these ingredients are recognised as one of the causes of diseases of affluence, especially cancers and cardiovascular diseases. The addition of these substances affects, however, the change in appearance, colour, volume, texture of the resulting products. Therefore, it is important to develop a production technology, including the determination of a quantity of the substance that will not lead to undesirable changes in quality and thus reduce consumer acceptance.

The use of fermentation, in addition to modifying flavour and aroma, increasing the digestibility of legume nutrients, can also generate functional components such as vitamins, antioxidants and other ingredients. The fermentation process itself involving *Lactobacillus plantarum* can also reduce food toxicity and introduce a probiotic food aspect.

These bacteria are attributed with many properties that, among other things, restore the natural biological balance on the surface of mucous membranes and have a beneficial effect on the metabolism and immunity of the human body. The biochemical activity of these strains has a significant impact on improving the nutritional and dietary values of fermented products. Previous studies have shown that fermentation processes have a positive effect on the antioxidant content of legumes.

They take place at moderate temperatures and with a limited oxygen supply, so that lipid oxidation is significantly reduced. Thanks to the hydrolytic action of enzymes, mainly beta-galactosidase involved in the "activation" of phenolic compounds, often inactive in the starting raw material, there is an increase in antioxidant activity. This is mainly the case for compounds occurring in the form of phenolic acid esters and glycosides. The decomposition of these compounds results in the release of the acid form or aglycone, which is attributed with the greatest bioactive antioxidant properties [Sakakibara et al., 2003; Miszkiewicz, 2005]. The enzymatic breakdown of proteins contained in the seeds of legumes, which is present during fermentation, also promotes increased antioxidant activity. The amino acids released into the environment have a synergistic effect with the antioxidants and provide additional protection for the product.

The method of processing by fermentation is seen as less drastic and allowing the functional properties of the seeds to be retained, at least in part [Bieżanowska-Kopeć 2006, Gumienna 2007, Szymandera-Buszka et al., 2021].

Document "Effects of addition of fermented seed flour on the content of bioactive components and nutraceutical potential of wheat wafers" [Jakubczyk Anna : LWT -FOOD SCIENCE AND TECHNOLOGY; vol 98 1 December 2018; pages 245-251] discloses the use of the lactic fermentation process, e.g. for the fermentation of white bean seeds without husk, made it possible to obtain snacks in the form of wafers characterized by a higher content of phenolic compounds and amino acid profile compared to the control sample (wheat wafers).

According to the Chinese patent no. CN101946878, there is known an instant dish composed of cereals, soya, potatoes, flavour enhancers, containing 1% broad beans. Low-fat snacks involving soya flour are known from US patent no. US7462371.

Chinese patent application No. CN110192564 A discloses cookies with a low carbohydrate content and high calorific value. Obtained from whole or shelled fermented soybeans, which were added to the formation of cookies in the form of soy flour, along with additives (e.g. konjac flour, pectin, oat flour).

The US patent no. US4124727 reveals snacks with a high protein content, made from seeds of legumes, ground oilseeds and cereal flours.

The method of producing freeze-dried vegetable wafers based on coloured beans involves soaking the bean or broad bean seeds in water for 20 to 40 minutes, preferably for 30 minutes, then cooking in the same water for 25 to 40 minutes, preferably 30 minutes; once cooled, the seeds and the aquafaba, i.e. the liquid residue remaining after the seeds have been cooked, are ground up for 45-105 s to produce a structure with a particle size from 0.5 to 0.8 mm. The mass thus obtained is subjected to bacterial fermentation using probiotic lactic fermentation bacteria *Lactobacillus plantarum,* preferably the LP - *Lactobacillus plantarum* strain and its starter bacterial culture. After fermentation, wafers are formed, preferably in the shape of a circle, from 1 to 2 cm thick and between 60-75 g in weight, preferably 1.5 cm thick and 70 g in weight. Preferably, when the shaped wafers have a diameter of 9 -10 cm, the wafers prepared in this way are subjected to a freeze-drying process for 2 days. Once the process is complete, the resulting wafers are packaged in packs, preferably individual ones.

The fermentation process of the bean or broad bean seeds is carried out in such a way that the lactic fermentation bacteria *Lactobacillus plantarum* are added to the aquafaba in a quantity of (10⁶ - 10⁸ cfu/100g), preferably (10⁸ cfu/100g), and the bean or broad bean mass is then subjected to the fermentation process, which is carried out at a temperature of 36-38 °C for 20 h +/- 2h, until the pH of the dough is 4.5 - 4.8. To obtain the structure, the resulting semi-finished product is mixed with 3% (w/w) of an inulin addition and, preferably with flavour enhancers: from 1.5 to 2.5% (w/w) of marjoram, preferably 2% (w/w) of marjoram, from 10 to 20% (w/w) of grated beetroot cooked for 30 minutes, preferably 15% (w/w), from 25 to 35% (w/w) of grated raw carrot, preferably 30% (w/w). Then, after the wafers have been formed, they are subjected to freeze-drying, with an initial freezing process at a temperature of -80°C for 20 to 30 hours, preferably for 24 hours, followed by freeze-drying that is carried out at a temperature of -40°C and pressure of 0.12 mbar for 18 to 20 hours, preferably for 19 hours; a drying out process is carried out for 3 to 5 hours, preferably for 4 hours at the pressure of 0.1 mbar, at a temperature of -42°C.

The wafers prepared in this way will contain from 66.5% (w/w) to 94.5% (w/w) of bean or broad bean seeds, from 15 to 30% (w/w) of flavour enhancers - beetroot, carrot and, irrespective of the variant used, 3% (w/w) of inulin and 0.5% (w/w) of salt.

Consumers can consume the wafers directly after freeze-drying as snack products. Their consumption allows to enrich the diet with the functional additives contained in beans or broad beans.

The object of the invention is presented in examples of realisation, in which selected variants of the implementation of the method, which do not exhaust the conditions specified in the essence of the invention, are indicated.

### Example I

The method of producing freeze-dried wafers involves soaking the broad bean seeds in water for 30 minutes and then cooking them in the water in which they have been previously soaked for another 30 minutes. The seeds including the remaining aquafaba are then ground up into a non-homogeneous mass and subjected to bacterial fermentation using *Lactobacillus plantarum* bacteria. 0.5% (w/w) of salt 3% (w/w) of inulin and 2% (w/w) of marjoram are added to the mass prepared in this way. Once the mass is mixed, 1.5 cm thick wafers with a weight of 70 g and a diameter of 9 -10 cm are formed and subjected to a freeze-drying process for 2 days. The finished wafers are packaged in individual, heat-sealed packs.

Whereas the fermentation process of the broad bean seeds is carried out in such a way that the lactic fermentation bacteria *Lactobacillus plantarum* are added to the aquafaba in a quantity of (10⁸ cfu) and then fermented at a temperature of 37 °C for 20 h, until the pH of the mass is 4.8.

The freeze-dried vegetable wafers according to the invention contain 94.5% (w/w) of broad bean seeds, 3% (w/w) of inulin, 2% of marjoram and 0.5% (w/w) of salt. Whereas the seeds are cooked for 30 minutes before the fermentation process. Prior to the freeze-drying process, they are fermented using *Lactobacillus plantarum* lactic fermentation bacteria in a quantity of 10⁸ cfu/100g, added to the aquafaba and mixed with ground seeds. The resulting freeze-dried mass is in a lyophiliser for 2 days at the pressure of 0.12 mbar, at a temperature from -80 to -42°C. The finished wafers are packaged in individual, heat-sealable packs.

### Example II

The method of producing freeze-dried wafers involves soaking the bean seeds in water for 30 minutes and then cooking them in the water in which they have been previously soaked for another 30 minutes. The seeds including the remaining aquafaba are then ground up to a non-homogeneous mass and subjected to bacterial fermentation using *Lactobacillus plantarum* bacteria. 0.5% (w/w) of salt, 3% (w/w) of inulin and 15% (w/w) of beetroot cooked for 30 minutes, peeled, grated to fine shreds using a universal grater, are added to the mass prepared in this way. Once the mass is mixed, 1.5 cm thick wafers with a weight of 70 g and a diameter of 9 -10 cm are formed and subjected to a freeze-drying process for 2 days. The finished wafers are packaged in individual, heat-sealed packs.

Whereas the fermentation process of the bean seeds is carried out in such a way that the lactic fermentation bacteria *Lactobacillus plantarum* are added to the aquafaba in a quantity of (10⁸ cfu) and then fermented at a temperature of 37 °C for 20 h, until the pH of the mass is 4.8 or 4.5.

Freeze-dried vegetable wafers according to the invention contain 81.5% (w/w) of bean seeds, 3% (w/w) of inulin, 15% (w/w) of beetroot and 0.5% (w/w) of salt. Whereas the seeds are cooked for 30 minutes before the fermentation process. Prior to the freeze-drying process, they are fermented using *Lactobacillus plantarum* lactic fermentation bacteria in a quantity of 10⁸ cfu/100g, added to the aquafaba and mixed with ground seeds. The resulting freeze-dried mass is in a lyophiliser for 2 days at the pressure of 0.12 mbar, at a temperature from -80 to -42°C. The finished wafers are packaged in individual, heat-sealable packs.

### Example III

The method of producing freeze-dried wafers involves soaking the broad bean seeds in water for 30 minutes and then cooking them in the water in which they have been previously soaked for another 30 minutes. The seeds including the remaining aquafaba are then ground up and subjected to bacterial fermentation using *Lactobacillus plantarum* bacteria. 0.5% (w/w) of salt, 3% (w/w) of inulin and 30% (w/w) of raw, peeled carrot, grated into fine shreds using a universal grater, are added to the mass prepared in this way. After the mass has been mixed, wafers are formed, with a thickness of 1.5 cm, a weight of 70 g and a diameter of 9 -10 cm. The wafers prepared in this way are subjected to the freeze-drying process for 24 hours, which are subjected to the freeze-drying process for 2 days. The finished wafers are packaged in individual, heat-sealed packs.

Whereas the fermentation process of the broad bean seeds is carried out in such a way that the lactic fermentation bacteria *Lactobacillus plantarum* are added to the aquafaba in a quantity of (10⁸ cfu) and then fermented at a temperature of 37 °C for 20 h, until the pH of the mass is 4.8 or 4.5.

The freeze-dried vegetable wafers according to the invention contain 66.5% (w/w) of broad bean seeds, 3% (w/w) of inulin, 30% of carrot and 0.5% (w/w) of salt. Whereas the seeds are cooked for 30 minutes before the fermentation process. Prior to the freeze-drying process, they are fermented using *Lactobacillus plantarum* lactic fermentation bacteria in a quantity of 10⁸ cfu/100g, added to the aquafaba and mixed with ground seeds. The resulting freeze-dried mass is in a lyophiliser for 2 days at the pressure of 0.12 mbar, at a temperature from -80 to -42°C. The finished wafers are packaged in individual, heat-sealable packs.

## Claims

1. The method of producing freeze-dried vegetable wafers based on coloured beans or broad beans **characterized in that** the bean or broad bean seeds are soaked in water for 20 to 40 minutes, preferably for 30 minutes, then cooked in the same water for 25 to 40 minutes, preferably for 30 minutes, after which, once cooled, the seeds and the aquafaba, i.e. the liquid residue remaining after the seeds have been cooked, are ground up for 45-105 s into a non-homogeneous mass with a particle size from 0.5 to 0.8 mm, which is subjected to bacterial fermentation using probiotic lactic fermentation bacteria *Lactobacillus plantarum,* preferably the LP *- Lactobacillus plantarum* strain and its starter bacterial culture; after fermentation, wafers are formed, preferably in the shape of a circle, from 1 to 2 cm thick, from 60 to 75 g in weight, preferably 1.5 cm thick and 70 g in weight, preferably with a diameter of 9 - 10 cm, and subjected to freeze-drying for 2 days, after the end of the process the obtained wafers are packaged in packs, preferably individual ones.

2. The method according to claim 1, **characterized in that** the fermentation process of the bean or broad bean seeds is carried out in such a way that the lactic fermentation bacteria *Lactobacillus plantarum* are added to the aquafaba in a quantity of (10⁶ - 10⁸ cfu/100g), preferably (10⁸ cfu/100g), and the bean or broad bean mass is then subjected to the fermentation process, which is carried out at a temperature of 36-38 ^{°}C for 20 h +/- 2h, until the pH of the dough is 4.5 - 4.8, and the resulting semi-finished product is mixed with 3% (w/w) of an inulin addition to obtain the structure.

3. The method according to claims 1 or 2, where the fermented mass, before it is formed into wafers, is provided with flavour enhancers in the form of 1.5 to 2% (w/w) of marjoram, preferably 2% (w/w), from 10 to 20% (w/w) of grated beetroot cooked for 30 minutes, preferably 15% (w/w), from 25 to 35% (w/w) of grated raw carrot, preferably 30% (w/w).

4. The method according to claims 1 or 2 or 3, **characterized in that**, after the wafers have been formed, they are subjected to freeze-drying, with an initial freezing process at a temperature of -80°C for 20 to 30 hours, preferably for 24 hours, followed by freeze-drying that is carried out at a temperature of -40^{°}C and pressure of 0.12 mbar for 18 to 20 hours, preferably 19 hours, the drying out process being carried out for 3 to 5 hours, preferably 4 hours at the pressure of 0.1 mbar, at a temperature of -42^{°}C.

## Patentansprüche

1. Ein Verfahren zur Herstellung von gefriergetrockneten Gemüsewaffeln auf Basis von bunten Bohnen oder Ackerbohnen, **dadurch gekennzeichnet, dass** die Samen der Bohnen oder Ackerbohnen 20 bis 40 Minuten, vorzugsweise 30 Minuten, in Wasser eingeweicht und anschließend in demselben Wasser 25 bis 40 Minuten, vorzugsweise 30 Minuten, gekocht werden, woraufhin nach dem Abkühlen die Bohnen und die Aquafaba, d. h. die nach dem Kochen der Bohnen verbleibende Flüssigkeit, 45 bis 105 Sekunden lang zu einer inhomogenen Masse mit einer Partikelgröße von 0,5 bis 0,8 mm gemixt werden, die einer bakteriellen Fermentation unter Anwendung des probiotischen Milchsäurebakteriums *Lactobacillus plantarum,* vorzugsweise des *LP-Lactobacillus plantarum-Stamms* und dessen Starterbakterienkultur unterzogen und nach der Fermentation zu Waffeln, vorzugsweise zu runden Waffeln, mit einer Dicke von 1 bis 2 cm, einem Gewicht von 60 bis 75 g, vorzugsweise 1,5 cm dick und 70 g schwer, vorzugsweise mit einem Durchmesser von 9 bis 10 cm geformt werden, und danach 2 Tage lang einer Gefriertrocknung unterzogen werden; nach Abschluss dieser Verarbeitung werden die so hergestellten Waffeln in Packungen, vorzugsweise Einzelpackungen, verpackt.

2. Ein Verfahren nach Anspruch 1, **dadurch gekennzeichnet, dass** der Fermentationsprozess der Samen der Bohnen oder Ackerbohnen derart abläuft, dass die Milchsäurebakterien *Lactobacillus plantarum* der Aquafaba in einer Menge von (10⁶ - 10⁸ KBE/100 g), vorzugsweise (10⁸ KBE/100 g) zugegeben werden und die Bohnen- oder Ackerbohnenmasse anschließend der Fermentation unterzogen wird, die bei Temperatur von 36 bis 38 ^{°}C für 20 h ± 2 h erfolgt solange, bis der pH-Wert der Masse 4,5 bis 4,8 beträgt, und das so erhaltene Halbfertigprodukt mit 3 % (Gew./Gew.) Inulin versetzt wird, um die gewünschte Struktur zu erhalten.

3. Ein Verfahren nach Anspruch 1 oder 2, wobei der fermentierten Masse, bevor sie zu Waffeln geformt wird, Geschmacksverstärker in Form von 1,5 bis 2 % (Gew./Gew.) Majoran, vorzugsweise 2 % (Gew./Gew.), 10 bis 20 % (Gew./Gew.) 30 Minuten lang gekochter geriebener Rote Beete, vorzugsweise 15 % (Gew./Gew.), 25 bis 35 % (Gew./Gew.) geriebener roher Karotten, vorzugsweise 30 % (Gew./Gew.) hinzugefügt werden.

4. Ein Verfahren nach Anspruch 1 oder 2 oder 3, **dadurch gekennzeichnet, dass** die Waffeln nach ihrer Herstellung einer Gefriertrocknung unterzogen werden, wobei zunächst ein Gefrierprozess bei einer Temperatur von -80 °C für 20 bis 30 Stunden, vorzugsweise für 24 Stunden, durchgeführt wird, gefolgt von einer Gefriertrocknung, die bei einer Temperatur von -40^{°}C und einem Druck von 0,12 mbar für 18 bis 20 Stunden, vorzugsweise 19 Stunden, durchgeführt wird, wobei der Trocknungsprozess für 3 bis 5 Stunden, vorzugsweise 4 Stunden, bei einem Druck von 0,1 mbar und einer Temperatur von -42^{°}C durchgeführt wird.

## Revendications

1. Procédé de production de gaufres végétales lyophilisées à base de haricots colorés ou de fèves, **caractérisé en ce que** les graines de haricot ou de fève sont trempées dans l'eau pendant 20 à 40 minutes, de préférence pendant 30 minutes, puis cuites dans la même eau pendant 25 à 40 minutes, de préférence pendant 30 minutes, après quoi, une fois refroidies, les graines et l'aquafaba, c'est-à-dire le résidu liquide restant après la cuisson des graines, sont broyées pendant 45 à 105 s en une masse non homogène présentant une granulométrie de 0,5 à 0,8 mm, laquelle est soumise à une fermentation bactérienne au moyen de bactéries probiotiques de fermentation lactique *Lactobacillus plantarum,* de préférence la souche LP *- Lactobacillus plantarum* et sa culture bactérienne de démarrage ; après fermentation, des gaufres sont formées, de préférence sous forme circulaire, d'une épaisseur de 1 à 2 cm, d'un poids de 60 à 75 g, de préférence d'une épaisseur de 1,5 cm et d'un poids de 70 g, de préférence d'un diamètre de 9 à 10 cm, et soumises à une lyophilisation pendant 2 jours, après la fin du procédé les gaufres obtenues étant conditionnées en emballages, de préférence individuels.

2. Procédé selon la revendication 1, **caractérisé en ce que** le procédé de fermentation des graines de haricot ou de fève est réalisé de telle sorte que les bactéries de fermentation lactique *Lactobacillus plantarum* sont ajoutées à l'aquafaba en une quantité de (10⁶ - 10⁸ ufc/100 g), de préférence (10⁸ ufc/100 g), puis la masse de haricot ou de fève est soumise au procédé de fermentation, lequel est réalisé à une température de 36 à 38 °C pendant 20 h ± 2 h, jusqu'à ce que le pH de la pâte soit de 4,5 à 4,8, et le semi-produit obtenu est mélangé avec 3 % (m/m) d'un ajout d'inuline afin d'obtenir la structure.

3. Procédé selon les revendications 1 ou 2, **caractérisé en ce que** la masse fermentée, avant d'être formée en gaufres, est pourvue d'exhausteurs de goût sous forme de 1,5 à 2 % (m/m) de marjolaine, de préférence 2 % (m/m), de 10 à 20 % (m/m) de betterave râpée cuite pendant 30 minutes, de préférence 15 % (m/m), et de 25 à 35 % (m/m) de carotte crue râpée, de préférence 30 % (m/m).

4. Procédé selon les revendications 1 ou 2 ou 3, **caractérisé en ce que**, après formation des gaufres, celles-ci sont soumises à une lyophilisation comprenant un procédé initial de congélation à une température de -80 °C pendant 20 à 30 heures, de préférence pendant 24 heures, suivi d'une lyophilisation réalisée à une température de -40 °C et sous une pression de 0,12 mbar pendant 18 à 20 heures, de préférence 19 heures, le procédé de séchage étant réalisé pendant 3 à 5 heures, de préférence 4 heures, sous une pression de 0,1 mbar, à une température de -42 °C.
